# EUROPÄISCHE PATENTSCHRIFT

(11) **EP 2 889 506 B1**
(45) Veröffentlichungstag und Bekanntmachung des Hinweises auf die Patenterteilung: **05.09.2018**
(21) Anmeldenummer: 14194237.5
(22) Anmeldetag: 21.11.2014
(51) Int. Cl.: F16G 11/02, F16G 11/04

(54) **Seilspannvorrichtung**
Cable tensioning device
Dispositif de serrage de corde

(30) Priorität: 17.12.2013 DE 202013105721 U
(43) Veröffentlichungstag der Anmeldung: 01.07.2015
(73) Patentinhaber: ABS Safety GmbH, 47623 Kevelaer (DE)
(72) Erfinder: Beckers, Ludwig, 47652 Weeze (DE)
(74) Vertreter: Ter Meer Steinmeister & Partner

(56) Entgegenhaltungen:
- EP-A2- 0 038 475
- FR-A1- 2 134 108
- JP-A- 2004 360 121
- US-A- 1 258 580
- US-A1- 2003 081 986

## Beschreibung

Die vorliegende Erfindung betrifft ein Seilsicherungssystem gemäß dem Oberbegriff des Anspruchs 1.

JP 2004 360121 A offenbart ein Seilsicherungssystem gemäß dem Oberbegriff des Anspruchs 1. Vergleichbare Seilsicherungssysteme werden in EP 0 038 475 A2 und in US 2003/081986 A1 offenbart.

Derartige Seilsicherungssysteme werden zur Sicherung von Personen bei Dach- oder Fassadenarbeiten eingesetzt. Sie umfassen Seile, die zwischen festen Anschlagpunkten am Gebäude gespannt sind. In diese Seile können sich dann zu sichernden Personen mit ihrer persönlichen Schutzausrüstung einklinken, etwa mit Karabinerhaken, die auf den fest verspannten Seilen frei laufen können.

Die Anschlagpunkte, zwischen denen die fest installierten Seile gespannt werden, sind mit Seilspannvorrichtungen ausgestattet. Seilspannvorrichtungen des Typs, auf welchen sich die vorliegende Erfindung bezieht, umfassen eine Klemmhülse, eine Anzahl von Klemmbacken, die sich in die Klemmhülse einsetzen lassen, und ein Gewindegegenstück, das zum Verspannen der Klemmbacken in die Klemmhülse einschraubbar ist. Die Klemmhülse ist an ihren gegenüberliegenden Enden offen, und ihr Innenraum verjüngt sich konisch zu einem Einsteckende, in welches sich ein Endabschnitt des zu verspannenden Seils einführen lässt. Die Klemmbacken sind um einen axialen Durchlasskanal zur Durchführung des Endabschnitts des Seils herum angeordnet und lassen sich in dieser Anordnung in die Klemmhülse einsetzen, also insbesondere in einer Position, in der die Klemmbacken seitlich außen am Endabschnitt des Seils anliegen. Wird das Gewindestück nun vom gegenüberliegenden Ende her in die Klemmhülse eingeschraubt, übt es in axialer Richtung einen Druck auf die Klemmbacken aus. Aufgrund der konischen Form des Innenraums der Klemmhülse werden die Klemmbacken infolgedessen von außen gegen das Seil gedrückt und klemmen dieses zwischen sich fest.

Das Einschrauben des Gewindegegenstücks erfolgt mit einem vorbestimmten Anzugsmoment, das ausreichend ist, um ein sicheres Einklemmen des Endabschnitts des Seils innerhalb der Klemmhülse sicherzustellen. Das Gewindegegenstück weist ferner in seiner Stirnseite eine Ausnehmung auf, in welcher sich das Seilende aufspleißen kann. Hierdurch wird das Seil zusätzlich daran gehindert, bei einer großen Zugbelastung zwischen den Klemmbacken aus der Klemmhülse gezogen zu werden.

Bei herkömmlichen Seilspannvorrichtungen werden die Klemmbacken lose durch einen Draht zusammengehalten und in dieser Position auf das Seilende aufgeschoben. Zusätzlich zu den vorstehend beschriebenen Bauteilen ist ferner ein Druckring erforderlich, da im montierten Zustand zwischen dem Gewindegegenstück und den Klemmbacken sitzt und den Druck des Gewindegegenstücks auf die Klemmbacken überträgt. Insgesamt ist somit eine relativ große Zahl von Bauteilen bei der Installation dieser Seilspannvorrichtung zu montieren. Dies erschwert die zuverlässige Installation des Seilsicherungssystems, insbesondere wenn die Montage an schwer zugänglichen Stellen und unter ungünstigen Witterungsbedingungen geschehen muss. Ferner ist es für eine sichere Montage erforderlich, das Seil so weit zwischen den Klemmbacken durchzuführen, dass ein ausreichend langes freies Seilende in die Ausnehmung im Gewindegegenstück ragt, so dass es sich darin aufspleißen kann. Um die hierzu notwendige Mindestlänge des in der Klemmhülse einliegenden Endabschnitts des Seils festzulegen, müssen die Klemmbacken bei der Montage in einer definierten Position am Seil angeordnet und festgeklemmt werden. Vor allem muss verhindert werden, dass das Seil beim Zusammensetzen der Teile zwischen den Klemmbacken durchrutscht. Dies erfordert eine gewisse Koordination und stellt ein zusätzliches Erschwernis bei der Montage dar.

Es ist daher eine Aufgabe der vorliegenden Erfindung, eine Seilspannvorrichtung der vorstehend beschriebenen Art derart weiterzuentwickeln, dass die Montage vereinfacht wird und die Installationssicherheit erhöht wird.

Diese Aufgabe wird erfindungsgemäß durch eine Seilspannvorrichtung mit den Merkmalen des Anspruchs 1 gelöst.

Bei der erfindungsgemäßen Seilspannvorrichtung sind die Klemmbacken an einem ihrer axialen Enden an einen Druckring angeformt, der gemeinsam mit den Klemmbacken einen einstückig ausgeformten Klemmeinsatz bildet. Die Klemmbacken und der Druckring bilden somit ein einziges Bauteil, so dass die gesamte Anzahl der Komponenten der Seilspannvorrichtung deutlich reduziert wird. Im montierten Zustand bildet der Druckring das Gegenlager für das Gewindegegenstück, d.h. beim Einschrauben wird die Stirnseite des Gewindegegenstücks unmittelbar gegen den Druckring gepresst. Durch die einstückige Ausbildung des Klemmeinsatzes werden die Klemmbacken in einer definierten Position um den freien Durchlasskanal herum gehalten und lassen sich aus dieser Position an ihren freien Enden leicht elastisch nach innen zusammendrücken. Diese Elastizität sowie der freie Durchmesser des Durchlasskanals lassen sich so auf den Durchmesser des Seils abstimmen, dass der Klemmeinsatz sich bereits selbsttätig, das heißt im nicht in die Klemmhülse eingepressten Zustand leicht gegen das Seil klemmt. Er kann dann zwar von Hand entlang des Seils verschoben werden, um die Länge des in die Klemmhülse einzusteckenden Endabschnitts des Seils festzulegen, behält jedoch im übrigen seine Position auf dem Seil bei. Hierdurch werden Montagefehler vermieden, die dadurch entstehen, dass während des Zusammenbaus der Seilspannvorrichtung das Seil aus der Klemmhülse rutscht und das in das Gewindegegenstück ragende Seilende zu kurz ist.

Gemäß der vorliegenden Erfindung umfasst die Seilspannvorrichtung ferner ein Seil, an dessen Außendurchmesser der Durchlasskanal zwischen den Klemmbacken des Klemmeinsatzes derart angepasst ist, dass die Klemmbacken im nicht in die Klemmhülse eingesetzten Zustand eine selbsttätige Klemmwirkung auf das Seil ausüben. Gemäß der vorliegenden Erfindung umfasst die erfindungsgemäße Seilspannvorrichtung ferner eine Kontermutter zur Sicherung der Schraubverbindung zwischen dem Gewindegegenstück und der Klemmhülse, die auf das Außengewinde des Gewindegegenstücks aufgeschraubt ist und gegen eine ringförmige Stirnfläche der Klemmhülse schraubbar ist. Ist somit das Gewindegegenstück bereits mit dem vorgegebenen Anzugsmoment in die Klemmhülse eingeschraubt, so dass die gewünschte Klemmwirkung auf das Seilende ausgeübt wird, wird ein selbsttätiges Lösen dieser Schraubverbindung durch die Kontermutter verhindert, die von außen gegen die Klemmhülse angezogen wird.

Im folgenden wird eine bevorzugte Ausführungsform der vorliegenden Erfindung anhand der Zeichnung näher erläutert.
- Fig. 1: ist ein Längsschnitt durch eine bevorzugte Ausführungsform der erfindungsgemäßen Seilspannvorrichtung; und
- Fig. 2 und 3: sind perspektivische Ansichten eines Klemmeinsatzes, der Bestandteil der Ausführungsform der Seilspannvorrichtung aus Fig. 1 ist.

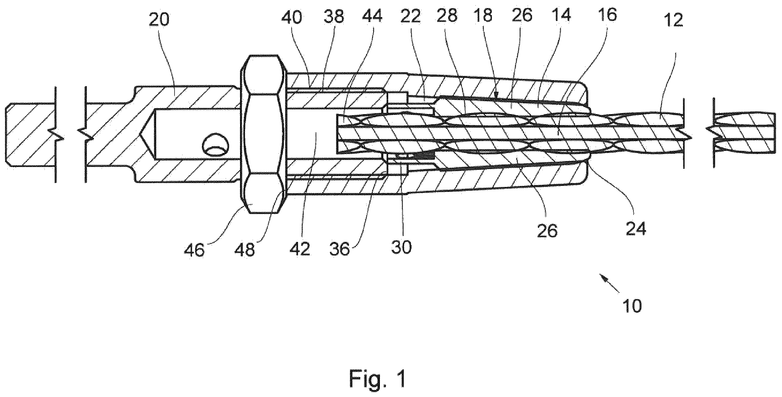

Die in Fig. 1 dargestellte Seilspannvorrichtung 10 stellt eine Komponente eines nicht näher dargestellten Seilsicherungssystems zur Personensicherung dar, also eines Absturzsicherungssystems für Personen, die in großen Höhen arbeiten, etwa auf Dächern oder an Fassaden. Das Seilsicherungssystem umfasst zu diesem Zweck ein Seil 12 aus Edelstahl, dessen Ende in der Seilspannvorrichtung 10 gehalten wird. Die Seilspannvorrichtung 10 ist selbst an einem nicht näher dargestellten Anschlagpunkt an oder auf einem Gebäude verankert. Wie im folgenden noch näher dargestellt werden soll, umfasst die Seilspannvorrichtung 10 Mittel, die es erlauben, die Klemmung eines Endabschnitts des Seils 12 zu sichern und ein selbsttätiges Lösen dieser Klemmung zu verhindern, so dass das Seil 12 auch bei einer Zugbelastung nicht aus der Seilspannvorrichtung 10 herausrutschen kann.

Im einzelnen umfasst die erfindungsgemäße Seilspannvorrichtung 10 eine Klemmhülse 14, die einen Endabschnitt 16 des Seils 12 aufnimmt, einen Klemmeinsatz 18, der innerhalb der Klemmhülse 14 aufgenommen ist und der den Endabschnitt 16 des Seils 12 umschließt, und ein Gewindegegenstück 20, das axial in die Klemmhülse 14 eingeschraubt ist und einen Druck auf den Klemmeinsatz 18 ausübt, der dafür sorgt, dass der Klemmeinsatz 18 den Endabschnitt 16 des Seils 12 sicher einklemmt.

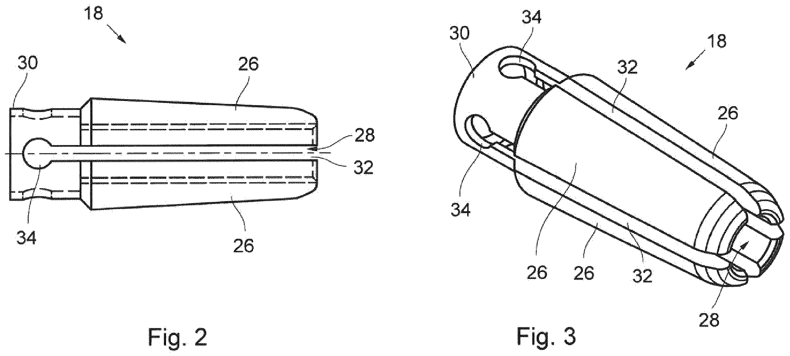

Der Innenraum 22 der Klemmhülse 14 verjüngt sich konisch zu einem ihrer Enden, nämlich zu dem in Fig. 1 rechts befindlichen offenen Ende, das im folgenden als Einsteckende 24 bezeichnet werden soll. Durch dieses Einsteckende 24 lässt sich das Seil 12 nach links in die Klemmhülse 14 einstecken, bis ein Endabschnitt 16 des Seils 12 von definierter Länge von der Klemmhülse 14 aufgenommen ist. Innerhalb dieses konischen Innenraums 22 liegt der Klemmeinsatz 18 ein, der im einzelnen näher in den Fig. 2 und 3 dargestellt ist.

Der Klemmeinsatz 18 weist eine Anzahl von Klemmbacken 26 auf, nämlich bei der vorliegenden Ausführungsform insgesamt vier Klemmbacken 26, die um einen axialen Durchlasskanal 28 zur Durchführung des Endabschnitts 16 des Seils 12 angeordnet sind. An einem axialen Ende des Klemmeinsatzes 18 sind die Klemmbacken 26 an einen Druckring 30 angeformt, der den Durchlasskanal 28 umschließt. Klemmbacken 26 und Druckring 30 sind somit zu einem einstückig ausgeformten Bauteil integriert. Die Spannbacken 26 sind voneinander durch Längsschlitze 32 getrennt, die an der Seite des Druckrings 30 zu einer kreisförmigen Aussparung 34 erweitert sind. Anders gesagt, an der Verbindungsstelle zwischen Druckring 30 und Spannbacke 26 ist die Breite der Spannbacken 26 in Umfangrichtung geringfügig verringert. Der Klemmeinsatz 18 lässt sich somit auch als Hülse beschreiben, die von einem ihrer Enden her durch die Längsschlitze 32 in die Spannbacken 26 aufgeteilt ist. Der Klemmeinsatz 18 weist eine leicht konische Form auf, die sich zu dem Ende, das den Druckring 30 gegenüberliegt, verjüngt. Diese konische Form entspricht der Form des Innenraums 22 der Klemmhülse 14.

Aufgrund dieser Form lässt sich der Klemmeinsatz 18 in die Montageposition einsetzen, die in Fig. 1 dargestellt ist. In dieser Position sitzt der Klemmeinsatz 18 bündig an der konischen Innenwand des Innenraums 22, und die Klemmbacken 26 liegen seitlich am Endabschnitt 16 des Seils 12 an. Der Querschnitt der Klemmbacken 26 verringert sich zum Einsteckende 24 der Klemmhülse 14 hin, während der Durchlasskanal 28 zwischen den Klemmbacken 26 eine im wesentlichen zylindrische Form aufweist. Der Druckring 30 ist an der dem Einsteckende 24 gegenüberliegenden Seite angeordnet und bildet ein Gegenlager für das Gewindegegenstück 20, das mit seiner Stirnseite 36, die zum Klemmeinsatz 18 weist, unmittelbar gegen den Druckring 30 stößt.

Zum Einschrauben weist das Gegengewindestück 20 an seinem zur Klemmhülse 14 weisenden Ende ein Außengewinde 38 auf, das sich in ein entsprechendes Innengewinde 40 der Klemmhülse 14 einschrauben lässt. In der Stirnseite 36 ist eine Ausnehmung 42 vorgesehen, die etwa zylindrisch ausgebildet ist und das Seilende 44 aufnimmt, das aus dem Klemmeinatz 18 frei herausragt. Als Druckfläche des Gewindestücks 20 bleibt somit lediglich ein ringförmiger Flächenbereich an seiner Stirnseite 36, der sich um die Öffnung dieser Ausnehmung 42 herum erstreckt und am Druckring 30 anliegt.

Wird in der in Fig. 1 dargestellten Position das Gewindegegenstück 20 in das Innengewinde 40 der Klemmhülse 14 eingeschraubt, übt das Gewindegegenstück 20 mit seiner Stirnseite 36 (genauer gesagt, mit dem ringförmigen Flächenbereich an dieser Seite) einen Druck auf den Druckring 30 aus. Hierdurch wird der Klemmeinsatz 18 in axialer Richtung zum Einsteckende 24 gepresst. Da sich der Innenraum 22 der Klemmhülse 14 in dieser Richtung verengt, werden gleichzeitig die Klemmbacken 26 nach innen gegen den Endabschnitt 16 des Seils 12 gepresst. Infolgedessen wird dieser Endabschnitt 16 in der Seilspannvorrichtung 10 eingeklemmt. Das Einschrauben des Gewindegegenstücks 20 erfolgt bevorzugt mit einem vorbestimmten Anzugsdrehmoment, das für die jeweilige Seilspannvorrichtung 10 spezifisch ist und den Anpressdruck der Klemmbacken 26 bestimmt. Ist die Klemmung erreicht, wird die Schraubverbindung zwischen dem Gewindegegenstück 20 und der Klemmhülse 14 durch eine Kontermutter 46 gesichert, die ebenfalls auf das Außengewinde 38 des Gewindegegenstücks 20 aufgeschraubt ist und gegen die äußere ringförmige Stirnfläche 48 der Klemmhülse 14 schraubbar und verspannbar ist.

Während der Endabschnitt 16 des Seils 12 zwischen den Klemmbacken 26 eingeklemmt ist, kann sich das freie Ende 44 des Seils 12 innerhalb der Ausnehmung 42 aufspleißen, das heißt, die Drähte des Seils 12 können sich leicht voneinander lösen. Dies trägt zusätzlich zum Halt des Endabschnitts 16 innerhalb des Klemmeinsatzes 18 bei, da auch unter großer Zuglast auf das Seil 12 ein Herausziehen zwischen den Klemmbacken 12 hindurch nicht ohne weiteres möglich ist. Voraussetzung hierfür ist allerdings, dass ein ausreichend langes Ende 44 des Seils 12 aus dem Durchlasskanal 28 zwischen den Klemmbacken 26 in Richtung des Gewindegegenstücks 20 austritt und somit frei von der Klemmwirkung ist. Bei der Montage der Seilspannvorrichtung 10 ist es daher von Bedeutung, die Einstecklänge des Endabschnitts 16 des Seils 12 ausreichend zu bemessen und insbesondere sicher zu verhindern, dass ein zu kurzer Seilabschnitt im Klemmeinsatz 18 festgeklemmt wird.

Bei der Montage wird diese Bemessung dadurch erleichtert, dass der Klemmeinsatz 18 seine Position auf dem Seil 12 selbsttätig beibehält, wenn er auf dieses aufgefädelt ist. Dies wird dadurch erreicht, dass der Durchlasskanal 28 im wesentlichen an den Außendurchmesser des Seils 12 angepasst ist. Ferner drücken sich die Klemmbacken 26 aufgrund ihrer leichten Elastizität geringfügig nach innen gegen die Oberfläche des Seils. Somit wird bereits im unbelasteten Zustand, also ohne Pressung in die Klemmhülse, eine selbsttätige Klemmwirkung auf das Seil ausgeübt. Diese leichte Klemmwirkung ist ausreichend, um den unbelasteten Klemmeinsatz 18 in seiner Position zu halten, jedoch so gering, dass ein Verschieben des Klemmeinsatzes 18 entlang des Seils 12 mit geringfügigem Kraftaufwand von Hand problemlos möglich ist. Der Klemmeinsatz 18 kann somit von Hand in eine Position geschoben werden, in der der Endabschnitt 16 des Seils 12 eine ausreichende Länge für eine sichere Montage aufweist.

Die dargestellte Seilspannvorrichtung 10 wird in den folgenden Montageschritten montiert. Zunächst wird die Klemmhülse 14 vom Ende 44 des Seils 12 her locker auf dieses aufgeschoben. Anschließend wird der Klemmeinsatz 18 auf das Seil 12 aufgeschoben und so positioniert, dass der durch den Klemmeinsatz 18 geführte Endabschnitt 16 des Seils 12 eine ausreichende Länge aufweist und insbesondere das Ende 44 des Seils 12 aus dem Druckring 30 um eine ausreichende Länge herausragt, beispielsweise um ca. 10 mm. Anschließend wird dieses herausragende Seilende 44 in die Ausnehmung 42 im Gewindegegenstück 20 eingesetzt und das Gewindegegenstück 20 mit seiner Stirnseite 36 gegen den Druckring 30 gelegt. In dieser Position wird die Klemmhülse 14 auf das Gewindegegenstück 20 aufgeschraubt und mit einem vorbestimmten Anzugsmoment angezogen, typischerweise mit 40 Nm. Hierdurch wird der Endabschnitt 16 des Seils 12 zwischen den Klemmbacken 26 des Klemmeinsatzes 18 eingeklemmt, wie oben beschrieben.

Die Schraubverbindung zwischen der Klemmhülse 14 und dem Gewindegegenstück 20 wird abschließend durch die Kontermutter 46 gesichert, die gegen die ringförmige Stirnfläche 48 der Klemmhülse 14 geschraubt wird.

## Patentansprüche

1. Seilsicherungssystem zur Personensicherung, umfassend eine Seilspannvorrichtung (10), mit einer Klemmhülse (14) zur Aufnahme eines Endabschnitts (16) eines Seils (12), deren Innenraum (22) sich konisch zu einem offenen Einsteckende (24) verjüngt und deren gegenüberliegendes weiteres Ende mit einem Innengewinde (40) versehen ist, einer Anzahl von Klemmbacken (26), die um einen axialen Durchlasskanal (28) zur Durchführung des Endabschnitts (16) des Seils (12) herum angeordnet sind und in dieser Anordnung in der Klemmhülse (14) einsetzbar sind, und einem Gewindegegenstück (20), das zum Einpressen der Klemmbacken (26) in die Klemmhülse (14) in deren Innengewinde (40) einschraubbar ist und an seiner Stirnseite (36) eine Ausnehmung (42) zur Aufnahme des Seilendes (44) aufweist, wobei die Klemmbacken (26) an einem axialen Ende an einen Druckring (30) angeformt sind, der gemeinsam mit den Klemmbacken (26) einen einstückig ausgeformten Klemmeinsatz (18) bildet und im montierten Zustand ein Gegenlager für das Gewindegegenstück (20) bildet, **gekennzeichnet durch** ein Seil (12), an dessen Au-ßendurchmesser der Durchlasskanal (28) zwischen den Klemmbacken (26) des Klemmeinsatzes (18) derart angepasst ist, dass die Klemmbacken (26) im nicht in die Klemmhülse (14) eingesetzten Zustand eine selbsttätige Klemmwirkung auf das Seil (12) ausüben, und durch eine Kontermutter (46) zur Sicherung der Schraubverbindung zwischen dem Gewindegegenstück (20) und der Klemmhülse (14), die auf das Außengewinde (38) des Gewindegegenstücks (20) aufgeschraubt ist und gegen eine ringförmige Stirnfläche (48) der Klemmhülse (14) schraubbar ist.

## Claims

1. Rope safety system for the protection of persons, comprising a rope tensioning device (10), with a ferrule (14) for receiving an ending (16) of a rope (12), wherein the internal space (22) of the ferrule narrows conically to an open insertion ending (24) and the opposite other ending of the ferrule is provided with an internal thread (40), a quantity of clamp jaws (26), which are arranged around an axial passage channel (28) for the passage of the ending (16) of the rope (12) and insertable into the ferrule (14) in this arrangement, and a threaded counterpart (20), which is screwable into the internal thread (40) for the impressing of the clamp jaws (26) into the ferrule (14) and comprises a recess (42) at its front side for receiving the rope ending (44), wherein the clamp jaws (26) are formed at an axial ending of a pressure ring (30), which constitutes, together with the clamp jaws (26), a single-piece clamping insertion (18) and forms a counter bearing for the threaded counterpart (20) in a mounted state, **characterized by** a rope (12), to whose outer diameter the aperture channel (28) between the clamp jaws (26) of the clamping insertion (18) is adapted in a way, that the clamp jaws (26) exert an automatic clamping force on the rope (12) while not inserted in the ferrule (14), and a counternut (46) for securing the screw coupling of the threaded counterpart (20) and the ferrule (14), wherein the counternut (46) is screwed on the outer thread (38) of the threaded counterpart (20) and screwable towards a ring-shaped front surface (48) of the ferrule (14).

## Revendications

1. Système de blocage de câble pour assurer la sécurité des personnes, comportant un dispositif de serrage de câble (10), ayant une douille de serrage (14) pour recevoir une partie d'extrémité (16) d'un câble (12) dont l'espace intérieur (22) se rétrécit de manière conique jusqu'à une extrémité d'insertion ouverte (24) et dont l'autre extrémité opposée est pourvue d'un filetage intérieur (40), une pluralité de mâchoires de serrage (26) qui sont agencées autour d'un canal de passage axial (28) pour le passage de la partie d'extrémité (16) du câble (12) et peuvent être placées dans cet agencement dans la douille de serrage (14), et une pièce filetée complémentaire (20) qui peut être vissée dans le filetage intérieur (40) de la douille de serrage (14) pour presser les mâchoires de serrage (26), et qui comporte sur sa face frontale (36) un évidement (42) pour recevoir l'extrémité de câble (44), dans lequel les mâchoires de serrage (26) sont formées à une extrémité axiale sur une bague de compression (30) qui forme un insert de serrage (18) solidaire des mâchoires de serrage (26) et forme, à l'état monté, une butée pour la pièce filetée complémentaire (20), **caractérisé par** un câble (12) sur le diamètre extérieur duquel le canal de passage (28) est adapté entre les mâchoires de serrage (26) de l'insert de serrage (18) de telle sorte que les mâchoires de serrage (26) exercent une action de serrage automatique à l'état non inséré dans la douille de serrage (14), et par un contre-écrou (46) destiné à bloquer la liaison vissée entre la pièce filetée complémentaire (20) et la douille de serrage (14), qui est vissée sur le filetage extérieur (38) de la pièce filetée complémentaire (20) et qui peut être vissée contre une surface frontale annulaire (48) de la douille de serrage (14).
